# EUROPÄISCHE PATENTANMELDUNG

(11) **EP 3 153 003 A1**
(43) Veröffentlichungstag der Anmeldung: **12.04.2017**
(21) Anmeldenummer: 16002103.6
(22) Anmeldetag: 29.09.2016
(51) Int. Cl.: A01D 41/14, A01D 57/20

(54) **SCHNEIDWERK MIT MITTENBAND UND ZUSÄTZLICHER KÖRNERVERLUSTSICHERUNG**

(30) Priorität: 06.10.2015 DE 102015116951; 19.10.2015 DE 102015117787
(71) Anmelder: Carl Geringhoff GmbH & Co. KG, 59227 Ahlen (DE)
(72) Erfinder: Webermann, Dirk, D-48308 Senden (DE); Selting, Stephan Schulze, D-59320 Enniger (DE); Pokriefke, Michael, D-27798 Hude (DE)
(74) Vertreter: Weeg, Thomas

(57) **Zusammenfassung**

Die vorliegende Erfindung bezieht sich auf ein Schneidwerk für landwirtschaftliches Erntegut zum Anbau an eine Erntemaschine, mit einem Tragrahmen, einem an der Vorderseite angeordneten Messerbalken mit daran befestigten Messern, Förderorganen zur Abförderung des geschnittenen Halmguts, wobei die Förderorgane zumindest zwei das Erntegut quer zur Fahrtrichtung fördernde Bandförderer und einen mittig angeordneten und entgegen der Fahrtrichtung fördernden Bandförderer als Mittenband (2) umfassen, und Antriebsmitteln zum Antrieb des Messerbalkens und der Förderorgan.

Um das Mittenband besser gegen Körnerveriuste über den seitlichen Rand des umlaufenden Bandes hinweg zu schützen, wird vorgeschlagen, dass das Mittenband (2) auf seiner nach außen weisenden Oberfläche an seinen seitlichen Rändern (4) jeweils eine körnersperrende Erhebung (6) aufweist.

## Beschreibung

Die vorliegende Erfindung bezieht sich auf ein Schneidwerk für landwirtschaftliches Erntegut zum Anbau an eine Erntemaschine, mit einem Tragrahmen, einem an der Vorderseite angeordneten Messerbalken mit daran befestigten Messern, Förderorganen zur Abförderung des geschnittenen Halmguts, wobei die Förderorgane zumindest zwei das Erntegut quer zur Fahrtrichtung fördernde Bandförderer und einen mittig angeordneten und entgegen der Fahrtrichtung fördernden Bandförderer als Mittenband umfassen, und Antriebsmitteln zum Antrieb des Messerbalkens und der Förderorgane.

Ein gattungsgemäßes Schneidwerk ist aus der Schrift US 7,444,798 bekannt. Das Mittenband verfügt auf seiner nach außen weisenden Oberfläche über in einem Abstand zueinander aufgesetzte Leisten, die zur Mitte hin nacheilend schräg angestellt sind. Die Leisten sollen Erntegut, das von den quer fördernden Bandförderern auf das Mittenband abgeworfen wird, von den seitlichen Rändern des umlaufenden Mittenbandes weg zur Mitte leiten. Das gilt insbesondere für Getreidekörner, die wesentlich sind für den Ernteertrag, die aber auch bei Stößen, Wind, Schrägstellungen des Schneidwerks bei der Ernte, Materialanhäufungen und anderen Störungen im Ernteprozess oder Gutfluss sehr leicht seitlich über die Ränder des Mittenbandes wegrollen und damit als Erntegut verloren gehen.

Es hat sich herausgestellt, dass die auf das umlaufende Mittenband aufgesetzten Leisten nicht unter allen Erntebedingungen ausreichen, um Körnerverluste über die seitlichen Ränder des Mittenbandes zu vermeiden. Insbesondere bei schwierigem Erntegut wie beispielsweise Samen von Ölsaaten wie Raps rollen die Körner trotz der Leisten auf der nach außen weisenden Oberfläche des Mittenbandes immer noch über den seitlichen Rand hinweg. Dabei kann es passieren, dass die Körner auf die Innenseite des umlaufenden Bandes fallen, von dort in den Bereich einer Umlenkrolle des Mittenbandes gelangen und dort zwischen der Oberfläche der Umlenkrolle und der Innenseite des umlaufenden Bandes zerquetscht werden. Das dabei aus den Körnern austretende Öl haftet an der Innenoberfläche des umlaufenden Bandes an und verursacht Schlupf und ein Durchrutschen der angetriebenen Umlenkrolle auf der Innenseite des umlaufenden Bandes, so dass dieses nicht mehr ordnungsgemäß angetrieben umläuft. Das an der Innenseite des umlaufenden Bandes anhaftende Öl kann zudem an der Luft verharzen und dadurch das umlaufende Band auf der Umlenkrolle festkleben und einen schüttelnden unruhigen Lauf des umlaufenden Mittenbandes verursachen.

Aus der Schrift EP 1 977 984 A1 ist es für Knollenfrüchte bekannt, an randseitigen Riemen eines Bandförderers Stützteile zu befestigen. An den Stützteilen ausgebildete aufragende Finger weisen zwischen sich einen Zwischenraum auf. Die Stützteile können an einem Mittenband nicht befestigt werden, weil das Bandmaterial im Vergleich zu den Förderriemen zu dünn ist. Die Stützteile sind auch zu wenig flexibel, um über eine längere Dauer schadlos um die schlanken Umlenkrollen umzulaufen, die bei Bandförderern und insbesondere Mittelbändern eingesetzt werden. Zudem sind die Zwischenräume an den Stützteilen zu groß, um Körner effektiv zurückhalten zu können.

Demgemäß ist es die Aufgabe der vorliegenden Erfindung, das Mittenband besser gegen Körnerverluste über den seitlichen Rand des umlaufenden Bandes hinweg zu schützen.

Die Aufgabe wird für ein gattungsgemäßes Schneidwerk gelöst, indem das Mittenband auf seiner nach außen weisenden Oberfläche an seinen seitlichen Rändern jeweils eine körnersperrende Erhebung aufweist.

Die körnersperrende Erhebung verhindert wirkungsvoll, dass Getreidekörner oder die Körner von Ölsaaten über die seitlichen Ränder des Mittenbands herabrollen. Wegen ihres vergleichsweise geringen Gewichts haben die Körner nur eine geringe kinetische Energie, wenn sie sich quer oder schräg zur Förderrichtung des Mittenbandes auf dessen Oberfläche bewegen. Erhebungen an den seitlichen Rändern bewirken bei einem Anprall von Körnern an ihren Seitenflächen, dass die Körner in ihrer Bewegung gestoppt werden und sich nicht weiter auf den seitlichen Rand des umlaufenden Bandes zu bewegen.

Die körnersperrenden Erhebungen sind entlang der vollen Länge der Ränder des Mittenbandes ausgebildet, um bei einem vollen Umlauf des Mittenbandes Körnerverluste zu vermeiden.

Die körnersperrenden Erhebungen müssen keine große Höhe aufweisen, um den Großteil der Körnerverluste zu vermeiden, der durch seitlich vom Mittenband herabfallende Körner verursacht wird. Eine Höhe von 0,5 cm über die nach außen weisende Oberfläche des umlaufenden Bandes reicht bereits aus, um viele der sich auf den seitlichen Rand zuzubewegenden Körner zu stoppen. Eine größere Höhe vergrößert natürlich die Quote der aufgefangenen Körner.

Die Erhebungen können direkt in das Material des umlaufenden Bandes eingegossen werden, wenn das umlaufende Band in einem Gießwerkzeug hergestellt wird. Es können aber auch Formteile, die die körnersperrenden Erhebungen bilden, auf das Material des Mittenbandes aufgesetzt und dort befestigt sein, beispielsweise durch kleben, vulkanisieren, nieten oder andere geeignete Befestigungstechniken.

Die körnersperrenden Erhebungen können über ihre gesamte Höhe und Breite hinweg zur Bandfläche hin durchgängig geschlossen sein. Bei einer zu großen Höhe der Erhebungen ergibt sich allerdings im Bereich der Umlenkrollen eine so starke Walkarbeit im Material der Erhebungen, dass sich die Erhebungen vom Material des umlaufenden Bandes ablösen können. Durch eine Höhenbeschränkung der Erhebungen auf ein geeignetes Maß und eine Anpassung des für die Erhebungen verwendeten Materials an die Walkarbeit und die dabei entstehenden Temperaturen im Material sowie die Verwendung eines geeigneten Befestigungsmittels für die Erhebungen, wenn diese nachträglich auf das Material des umlaufenden Bandes aufgesetzt sind, kann eine noch zufrieden stellende Standzeit der Erhebungen erreicht werden.

Nach einer Ausgestaltung der Erfindung weist die kömersperrende Erhebung über ihre Länge einen seitlichen Versatz quer zur Rotationsrichtung des Mittenbandes auf. Der seitliche Versatz kann so ausgebildet sein, dass die Erhebung beispielsweise in Schlaufen gelegt ist. Abschnitte der in Schlaufen gelegten körnersperrenden Erhebung sind teilweise oder überwiegend in Querrichtung zur Umlaufrichtung orientiert. Das Material der Schlaufen der körnersperrenden Erhebung ist deshalb in diesen Abschnitten beim Umlauf um eine Umlenkrolle selbst nicht so stark auf Zug belastet wie andere Abschnitte der körnersperrenden Erhebung, die sich im Wesentlichen oder vollständig in Umlaufrichtung des Mittenbandes erstrecken. Das Material der körnersperrenden Erhebung im Bereich der Schlaufen bildet so eine Materiaireserve für stärker auf Zug belastete Abschnitte des Materials der körnersperrenden Erhebung. Die Materialreserve kann so einen Teil der auf die eher in Umlaufrichtung ausgerichteten Abschnitte einwirkenden Zugbelastungen aufnehmen und dadurch die gemittelte Zugbelastung senken. Beim Umlauf um eine Umlenkrolle sind die auf die äußeren Bereiche des Materials der körnersperrenden Erhebung einwirkenden Zugbelastungen deshalb geringer, wodurch die Lebensdauer der körnersperrenden Erhebung und des Mittenbandes insgesamt deutlich ansteigt. Der seitliche Versatz der körnersperrenden Erhebung quer zur Rotationsrichtung des Mittenbandes muss aber nicht in Schlaufenform ausgebildet sein, auch ein gezackter Verlauf in Zickzack-Form oder ein Verlauf in Wellenmustern oder andere Ausgestaltungen sind beispielsweise möglich.

Nach einer Ausgestaltung der Erfindung sind die körnersperrenden Erhebungen mit schräg oder quer zur Förderrichtung des umlaufenden Bandes ausgerichteten Schnitten, Scharten oder Freiräumen ausgebildet, die sich über einen Teil oder die volle Höhe der Erhebungen erstrecken. Die Schnitte, Scharten oder Freiräume verringern die Walkarbeit im Material der Erhebungen. Ohne die Schnitte, Scharten oder Freiräume wird das Material der Erhebungen beim Umlauf um eine Umlenkrolle über die Höhe des Materials hinweg über die wegen des bei zunehmender Höhe größer werdenden Radiusses über die Umlauflänge der Erhebungen nach außen hin zunehmend intensiv auseinandergezogen und gestaucht. So tief wie die Schnitte, Scharten oder Freiräume reichen, kann das Material der Erhebungen nun blockweise beim Umlauf um die Umlenkrolle vorschwenken, ohne dabei das Material eines benachbarten Blocks der Erhebung mitzuziehen, so dass sich die Schnitte, Scharten oder Freiräume während eines Umlaufs um die Umlenkrolle V-förmig und scherenartig öffnen und wieder in die Ausgangsstellung zurück schließen.

Dieser Effekt kann auch dazu ausgenutzt werden, um Erntegut, das auf den Randbereich des Mittenbandes fällt, mitzunehmen. Solches Erntegut kann zumindest teilweise in die Schnitte, Scharten oder Freiräume fallen und dort vom Material festgeklemmt werden. Geklemmt in den Schnitten, Scharten und Freiräumen gehalten wird es dann in Förderrichtung des Mittenbandes bis zur Umlenkrolle mitgenommen, wo sich die Schnitte, Scharten oder Freiräume scherenartig öffnen und das geklemmt gehaltene Erntegut dadurch losgelassen wird. Dadurch kann es dann vom Mittenband weg weiter in die gewünschte Förderrichtung bewegt werden.

Die Scharten können als einfache Schnitte oder Ausschnitte in das Material der Erhebungen hinein ausgeführt sein. Die Scharten können aber auch als Freiraum ausgebildet sein, der zwischen benachbarten Materialblöcken der Erhebungen ausgebildet ist. Die Form, Tiefe und Breite der Scharte oder des Freiraums sollte dabei an das Erntegut angepasst sein, das mit den Erhebungen aufgehalten werden soll. Zu große Freiräume führen zu Körnerverlusten.

Nach einer Ausgestaltung der Erfindung sind mehrere Reihen von körnersperrenden Erhebungen in Längsrichtung des Mittenbandes nebeneinander angeordnet, die durch sich zumindest im Wesentlichen in Längsrichtung des Mittenbandes ersteckende Schnitte, Scharten oder Freiräume voneinander getrennt sind. Durch mehrere Reihen von körnersperrenden Erhebungen kann die Sperrwirkung der am Rand des Mittenbandes ausgebildeten Erhebungen erhöht werden. Das gilt insbesondere dann, wenn in den Erhebungen Scharten oder Freiräume vorhanden sind, die durch Erhebungen einer benachbarten Reihe in Querrichtung verengt oder ganz verdeckt werden.

Nach einer Ausgestaltung der Erfindung weisen die Reihen der körnersperrenden Erhebungen schräg oder quer zur Förderrichtung des umlaufenden Bandes ausgerichtete Schnitte, Scharten oder Freiräume auf, die in Querrichtung des Mittenbandes zueinander versetzt ausgebildet sind. Die einzelnen Blöcke der Reihen von Erhebungen stehen dadurch auf Lücke, so dass ein Korn nicht mehr durch den Schnitt, die Scharte oder den Freiraum zwischen zwei benachbarten Blöcken einer Reihe hindurch rollen kann, sondern spätestens von dem auf Lücke stehenden Block einer benachbarten Reihe gestoppt wird.

Nach einer Ausgestaltung der Erfindung sind die Erhebungen aus einem elastomeren Material hergestellt. Durch das elastomere Material verfügen die Erhebungen über die erforderliche Elastizität, um sich beim Umlauf um die Umlenkrollen umformen zu können.

Nach einer Ausgestaltung der Erfindung bestehen die körnersperrenden Erhebungen aus mehreren nebeneinander angeordneten Reihen von Formkörpern, wobei die Formkörper in Richtung der Reihe jeweils einen Abstand zum nächsten Formkörper aufweisen und die Reihen zueinander auf Lücke angeordnet sind. Eine solche Anordnung bietet einen guten Kompromiss aus der Dauerhaftigkeit und Langlebigkeit der Erhebung und der Sperrwirkung gegen Körnerverluste.

Nach einer Ausgestaltung der Erfindung weisen die Formkörper eine zylindrische Grundform auf.

Nach einer Ausgestaltung der Erfindung sind auf der nach außen weisenden Oberfläche des Mittenbandes Leisten aufgesetzt, die sich im Wesentlichen quer zur Förderrichtung des Mittenbandes erstrecken und über ihre Erstreckung quer über das Mittenband eine Wellenform aufweisen. Die Leiste in Wellenform hat beim Umlauf des Mittenbandes um die Umlenkrollen den Vorteil, dass sich das Material der Leiste bei einer entsprechenden Elastizität des Materials dabei Material aus Bereichen der Leiste ziehen kann, die sich noch nicht im Wirkbereich der Umlenkrolle befinden.

Nach einer Ausgestaltung der Erfindung ist die Amplitude der Wellenform der auf der nach außen weisenden Oberfläche des Mittenbandes aufgesetzten Leisten höher als der halbe Umfang einer Umlenkrolle des Mittenbandes. Durch diese Amplitudenhöhe wird sichergestellt, dass die Leiste bei einem Umlauf um eine Umlenkrolle nicht vollständig im Wirkbereich der Umlenkrolle ist.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand von Ausführungsbeispielen näher erläutert werden. Es zeigen:
- Fig. 1:: eine Teilansicht eines Mittenbandes aus einer Ansicht von schräg vorne, und
- Fig. 2a, b und c:: Ansichten auf eine alternative Ausgestaltung mit einer in Schlaufen angeordneten seitlichen körnersperrenden Erhebung.

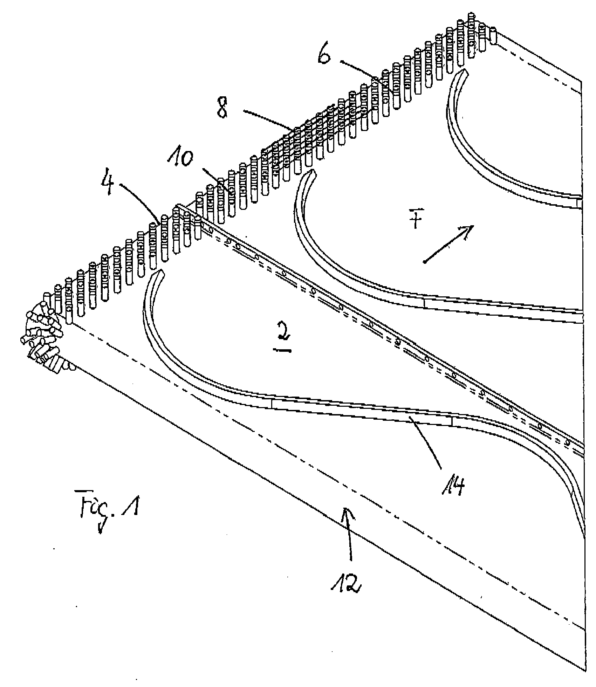

Die Fig. 1 zeigt eine Teilansicht eines Mittenbandes aus einer Ansicht von schräg vorne.

In Fig. 1 ist ein Mittenband 2 aus einer Ansicht von schräg oben in einem Ausschnitt gezeigt. Das Mittenband 2 ist in Förderrichtung F entgegen der Fahrtrichtung der Erntemaschine in den stehenden Bestand des Ernteguts hinein endlos umlaufend angetrieben. Das Mittenband 2 hat seitliche Ränder 4. Das geschnittene Erntegut wird dem Mittenband 2 in einem Draper-Schneidwerk von seitlichen Bandförderern zugefördert, die das Erntegut über die seitlichen Ränder 4 hinweg auf die Oberseite des Mittenbandes 2 abwerfen.

In der Fig. 1 sind am seitlichen Rand 4 des Mittenbandes 2 sechs Reihen 8 von Erhebungen 6 gezeigt. Im Ausführungsbeispiel bestehen die Erhebungen 6 aus Formkörpern 10, die eine zylindrische Grundform aufweisen. Die Formkörper 10 sind mit gleichmäßigen Abständen zueinander aufgereiht. Die Reihen 8 sind zueinander auf Lücke versetzt, so dass die Formkörper 10 einer Reihe jeweils in Querrichtung eine Lücke verdecken, die Formkörper 10 einer benachbarten Reihe zwischen sich aufweisen.

In dem in Fig. 1 gezeigten Ausführungsbeispiel haben die Lücken beziehungsweise die Freiräume eine Breite, die etwas größer ist als der Durchmesser eines Formkörpers 10. Die Lücken können allerdings auch kleiner ausfallen und sogar zu einem Schlitz verengt sein zwischen benachbarten Materialblöcken einer Erhebung, der sich erst im Umlaufbereich des Mittenbandes um eine Umlenkrolle 12 scherenartig öffnet, wie dies in Fig. 1 auch im Umlaufbereich für die Formkörper 10 erkennbar ist. Die in Fig. 1 gezeigten Lücken beziehungsweise Freiräume reichen von der Oberseite der Formteile 10 bis auf die nach außen weisende Oberfläche des Mittenbandes 2. Davon abweichend können die Lücken auch weniger tief reichen, indem die Bodenbereiche der Lücken im Bereich der Erhebung 6 über die nach außen weisende Oberfläche des Mittenbandes 2 hervorstehen.

Auf der nach außen weisenden Oberfläche des Mittenbandes sind Leisten 14 aufgesetzt, die sich im Wesentlichen quer zur Förderrichtung des Mittenbandes erstrecken und über ihre Erstreckung quer über das Mittenband eine Wellenform aufweisen. Die Amplitude der Wellenform der auf der nach außen weisenden Oberfläche des Mittenbandes aufgesetzten Leisten ist höher als der halbe Umfang einer Umlenkrolle des Mittenbandes.

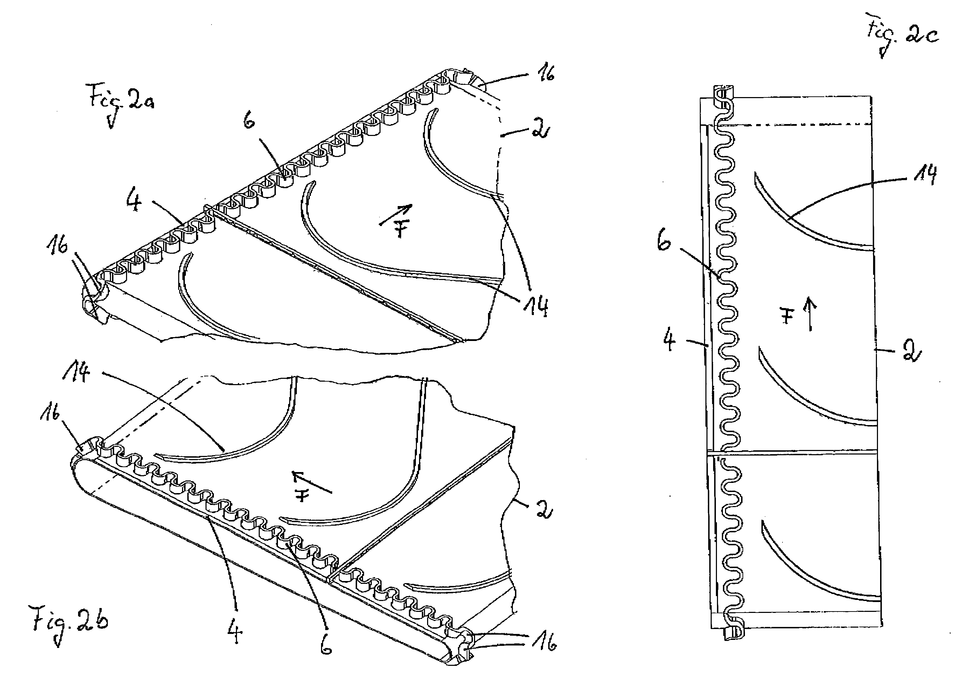

In den Fig. 2a, 2b und 2c sind Ansichten auf eine alternative Ausgestaltung mit einer in Schlaufen angeordneten seitlichen körnersperrenden Erhebung 6 gezeigt. Die in den Fig. 2a, 2b und 2c gezeigte körnersperrende Erhebung 6 ist in Schlaufen gelegt und weist über ihre Länge einen seitlichen Versatz quer zur Rotationsrichtung des Mittenbandes 2 auf. Die in Umlaufrichtung F zugbelasteten Abschnitte der seitlichen körnersperrenden Erhebung 6 können sich aus dem Material der in Schlaufen gelegten Abschnitte Material ziehen, das nicht oder nur kaum Zugbelastungen ausgesetzt ist. Dies ist in den Bereichen erkennbar, in denen das Mittenband 2 um die Umlenkrollen umläuft. So sind im Bereich der Umlenkrollen gedehnte Bereiche 16 der Erhebung 6 erkennbar, in denen das Material der Erhebung 6 in die Länge gezogen ist und dabei Material aus der Schlaufe in Umlaufrichtung F zur flexiblen Längenänderung der Erhebung 6 genutzt ist. Dadurch wird das Material der seitlichen Erhebungen 6 insgesamt erheblich von Spannungskräften verschont und entlastet, was die Lebensdauer des Materials der körnersperrenden Erhebungen 6 signifikant erhöht. Die Erfindung ist nicht auf das vorstehende Ausführungsbeispiel beschränkt. Dem Fachmann bereitet es keine Schwierigkeiten, das Ausführungsbeispiel auf eine ihm geeignet erscheinende Weise abzuwandeln, um es an einen konkreten Anwendungsfall anzupassen.

## Patentansprüche

1. Schneidwerk für landwirtschaftliches Erntegut zum Anbau an eine Erntemaschine, mit einem Tragrahmen, einem an der Vorderseite angeordneten Messerbalken mit daran befestigten Messern, Förderorganen zur Abförderung des geschnittenen Halmguts, wobei die Förderorgane zumindest zwei das Erntegut quer zur Fahrtrichtung fördernde Bandförderer und einen mittig angeordneten und entgegen der Fahrtrichtung fördernden Bandförderer als Mittenband (2) umfassen, und Antriebsmitteln zum Antrieb des Messerbalkens und der Förderorgane, **dadurch gekennzeichnet, dass** das Mittenband (2) auf seiner nach außen weisenden Oberfläche an seinen seitlichen Rändern (4) jeweils eine körnersperrende Erhebung (6) aufweist.

2. Schneidwerk nach Anspruch 1, **dadurch gekennzeichnet, dass** die körnersperrende Erhebung (6) über ihre Länge einen seitlichen Versatz quer zur Rotationsrichtung des Mittenbandes (2) aufweist.

3. Schneidwerk nach Anspruch 1 oder 2, **dadurch gekennzeichnet, dass** die körnersperrenden Erhebungen (6) mit schräg oder quer zur Förderrichtung (F) des umlaufenden Bandes ausgerichteten Schnitten, Scharten oder Freiräumen ausgebildet sind, die sich über einen Teil oder die volle Höhe der Erhebungen (6) erstrecken.

4. Schneidwerk nach einem der vorhergehenden Ansprüche, **dadurch gekennzeichnet, dass** mehrere Reihen (8) von körnersperrenden Erhebungen (6) in Längsrichtung des Mittenbandes (2) nebeneinander angeordnet sind, die durch sich zumindest im Wesentlichen in Längsrichtung des Mittenbandes (2) ersteckende Schnitte, Scharten oder Freiräume voneinander getrennt sind.

5. Schneidwerk nach Anspruch 4, **dadurch gekennzeichnet, dass** die Reihen (8) der körnersperrenden Erhebungen (6) schräg oder quer zur Förderrichtung (F) des umlaufenden Bandes ausgerichtete Schnitte, Scharten oder Freiräume aufweisen, die in Querrichtung des Mittenbandes (2) zueinander versetzt ausgebildet sind.

6. Schneidwerk nach einem der vorhergehenden Ansprüche, **dadurch gekennzeichnet, dass** die Erhebungen (6) aus einem elastomeren Material hergestellt sind.

7. Schneidwerk nach einem der vorhergehenden Ansprüche, **dadurch gekennzeichnet, dass** die körnersperrenden Erhebungen (6) aus mehreren nebeneinander angeordneten Reihen von Formkörpern (10) bestehen, wobei die Formkörper (10) in Richtung der Reihe jeweils einen Abstand zum nächsten Formkörper (10) aufweisen und die Reihen zueinander auf Lücke angeordnet sind.

8. Schneidwerk nach Anspruch 7, **dadurch gekennzeichnet, dass** die Formkörper (10) eine zylindrische Grundform aufweisen.

9. Schneidwerk nach einem der vorhergehenden Ansprüche, **dadurch gekennzeichnet, dass** auf der nach außen weisenden Oberfläche des Mittenbandes (2) Leisten (14) aufgesetzt sind, die sich im Wesentlichen quer zur Förderrichtung (F) des Mittenbandes (2) erstrecken und über ihre Erstreckung quer über das Mittenband (2) eine Wellenform aufweisen.

10. Schneidwerk nach Anspruch 9, **dadurch gekennzeichnet, dass** die Amplitude der Wellenform der auf der nach außen weisenden Oberfläche des Mittenbandes (2) aufgesetzten Leisten (14) höher als der halbe Umfang einer Umlenkrolle (12) des Mittenbandes (2) ist.
